# EUROPEAN PATENT SPECIFICATION

(11) **EP 0 413 586 B1**
(45) Date of publication and mention of the grant of the patent: **21.01.1998**
(21) Application number: 90309008.2
(22) Date of filing: 16.08.1990
(51) Int. Cl.: G06F 11/14

(54) **A system to pass through resource information**
System zum Durchgang von Hilfsmittelinformation
Système pour le passage en continu de ressource d'information

(30) Priority: 17.08.1989 JP 211991/89; 13.10.1989 JP 266425/89
(43) Date of publication of application: 20.02.1991
(73) Proprietor: FUJITSU LIMITED, Kawasaki-shi, Kanagawa 211 (JP)
(72) Inventor: Ogisu, Yukihisa, Shizuoka, 410-03 (JP); Shimizu, Kunio, Numazu-shi, Shizuoka, 410 (JP)
(74) Representative: Fane, Christopher Robin King

(56) References cited:
- EP-A- 0 156 179
- IBM TECHNICAL DISCLOSURE BULLETIN. vol. 20, no. 5, October 1977, NEW YORK US pages 1955 - 1958; N. K. OUCHI ET AL.: 'CHECK POINT COPY FOR A TWO-STAGE STORE'
- IBM TECHNICAL DISCLOSURE BULLETIN. vol. 30, no. 6, November 1987, NEW YORK US pages 351 - 353; 'ROLLING CHECKPOINT IN A TRANSACTION PROCESSING SYSTEM'

## Description

The present invention relates to transfer of resource information in computing apparatus, in particular computing apparatus made fault tolerant by having a back-up process which takes tasks over from an actual process when the latter process fails by using information stored by the actual process in a shared memory (such as a non-volatile shared memory).

An effective way of making a computer system fault tolerant is to have two controlling processes: one for a normal operation, and the other as a back-up for continuing a controlling operation in the event of a failure of the controlling process for the normal operation.

The former controlling process is called an actual process and the latter is called a back-up process.

In case of a fault, various resource information must be passed through to switch operation from the actual process to the back-up process. A system of passing through the resource information at high speed and with surety is sought.

The resource information can be effectively passed from the actual process to the back-up process through a non-volatile shared memory such as a semiconductor external memory device, commonly accessible by the two processes.

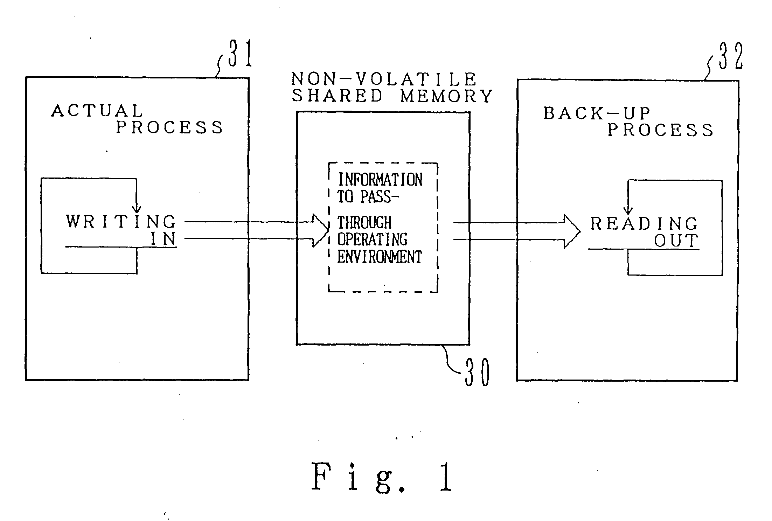

Figure 1 shows conventional such computing apparatus operable selectively to execute an actual process 31 and a back-up process 32, the said back-up process being executed in place of the said actual process following a crash of the said actual process, and the apparatus having a shared memory 30, accessible by both the said actual process and the said back-up process, in which resource information needed by the said back-up process to enable it to continue handling tasks of the computing apparatus following such a crash is stored by the said actual process during normal operation thereof so that the stored resource information can be read subsequently by the said back-up process.

In such computing apparatus, two methods can be considered for passing resource information through the non-volatile shared memory.

One is to pass the resource information in a batch at a crash time of the actual process.

The other is to pass the resource information sequentially when the actual process is operating.

It is possible to speed up the switching by a certain degree by passing resource information from the actual process to the back-up process through the non-volatile shared memory. However, the switching performance is affected as the volume of the resource information becomes larger.

As discussed before, the back-up process 32 must take over a dynamically changing operating environment handled by the actual process 31, when the actual process 31 is caused to fail by faults.

If the information for carrying over the operating environment is set to be passed in a batch at a crash time of the actual process 31, the performance of switching from the actual process 31 to the back-up process 32 deteriorates, because it takes time to set the operating environment based on the passed-through information.

In short, the first method, in which the resource information is passed through in a batch at the crash time of the actual process, has a problem of switching performance deterioration. This is because it takes time to transmit and set all resource information at the crash time.

Therefore, the second method, in which the resource information such as the operating environment is passed through sequentially when the actual process 31 is operating, may be employed as shown in Figure 1.

When the operating environment for controlling the network resources is built in advance, certain conditions must be met if the second method is adopted, where the actual process 31 writes the changed operating environment information in nonvolatile shared memory 30 and the back-up process 32 is notified at a certain time interval or when the volume of changed information reaches a predetermined value. Those conditions are as follows.
(1) There is no deterioration in the performance (processing step) compared with the operation of the actual process 31. That is, the actual process 31 is unaffected by the intermittent advance building of the operating environment in the back-up process 32.
(2) The same data at the same time are assured for the back-up process 32 as for the actual process 31.

The second prior art method cannot yet meet the above two conditions simultaneously, since an area of non-volatile shared memory 30 is used only as a single structure. For instance, data integrity cannot always be guaranteed when the back-up process 32 simultaneously reads the portion being written by the actual process 31. If an exclusive control such as a lock control is made to counter this, the processing of the actual process 31 can be kept waiting, and a problem of slow response may arise in an ordinary operation.

The objects of the invention are achieved by the apparatus and method set forth in the independent claims.

According to a first aspect of the present invention there is provided computing apparatus, operable selectively to execute an actual process and a back-up process, the said back-up process being executed in place of the said actual process following a crash of the said actual process, which apparatus includes: a shared memory, accessible by both the said actual process and the said back-up process, in which resource information needed by the said back-up process to enable it to continue handling tasks of the computing apparatus following such a crash is stored by the said actual process during normal operation thereof so that the stored resource information can be read subsequently by the said back-up process; batch transfer means operable, following such a crash of the said actual process, to cause the said back-up process to read from the shared memory any such resource information stored therein that has been preclassified as belonging to a first class of the said resource information, such stored first-class resource information not being read by the said back-up process during the said normal operation of the said actual process; and intermittent transfer means operative during the said normal operation of the actual process to cause the back-up process to read intermittently from the shared memory resource information stored therein that has been preclassified as belonging to a second class of the said resource information different from the said first class, the said resource information belonging to the said first class having higher frequencies of change than resource information belonging to the said second class, such intermittent reading being caused to take place when the volume of stored resource information belonging to the said second class reaches a predetermined threshold value and/or when a preset time interval has expired; the said batch transfer means also being operative, following such a crash of the said actual process, to cause the said back-up process to read from the said shared memory any remaining second-class resource information stored therein that has not already been transferred to the said back-up process by the said intermittent reading.

According to a second aspect of the present invention there is provided a method of transferring resource information in computing apparatus operable selectively to execute an actual process and a back-up process, the said back-up process being executed in place of the said actual process following a crash of the said actual process, and the resource information being information needed by the back-up process to enable it to continue handling tasks of the computing apparatus following such a crash of the said actual process, in which method: such resource information is stored by the actual process, during normal operation thereof, in a shared memory that is accessible by both the actual process and the back-up process so that the stored resource information can be read subsequently by the back-up process; following such a crash of the said actual process, the said back-up process is caused to read from the said shared memory any such resource information stored therein that has been preclassified as belonging to a first class of the said resource information, such stored first-class resource information not being read by the said back-up process during the said normal operation of the actual process; during the said normal operation of the actual process the back-up process is caused to read intermittently from the said shared memory resource information stored therein that has been preclassified as belonging to a second class of the said resource information, different from the said first class, the said resource information belonging to the said first class having higher frequencies of change than resource information belonging to the said second class, such intermittent reading being caused to take place when the volume of stored resource information belonging to the said second class reaches a predetermined threshold value and/or when a preset time interval has expired; and following such a crash of the said actual process, the said back-up process is caused to read from the said shared memory any remaining second-class resource information stored therein that has not already been transferred to the said back-up process by the said intermittent reading.

Such an apparatus and/or method can assist in solving the problems mentioned in the introduction so as to make the advance establishment of a fault-tolerant operating environment efficient and reliable.

Reference will now be made, by way of example, to the accompanying drawings, in which:
Figure 1 shows an example of computing apparatus in which resource information is transferred by a conventional method;
Figures 2A and 2B are drawings for use in explaining a principle of the present invention;
Figure 3 shows a preferred embodiment of this invention.
Figures 4A and 4B show an example of the data structure of pass-through information in the Figure 3 embodiment.
Figure 5 is a processing flowchart of an actual process during an ordinary operation in the Figure 3 embodiment.
Figure 6 is a processing flow chart of a back-up process during an ordinary operation in the Figure 3 embodiment.
Figure 7 is a processing flow chart of the back-up process in the Figure 3 embodiment.

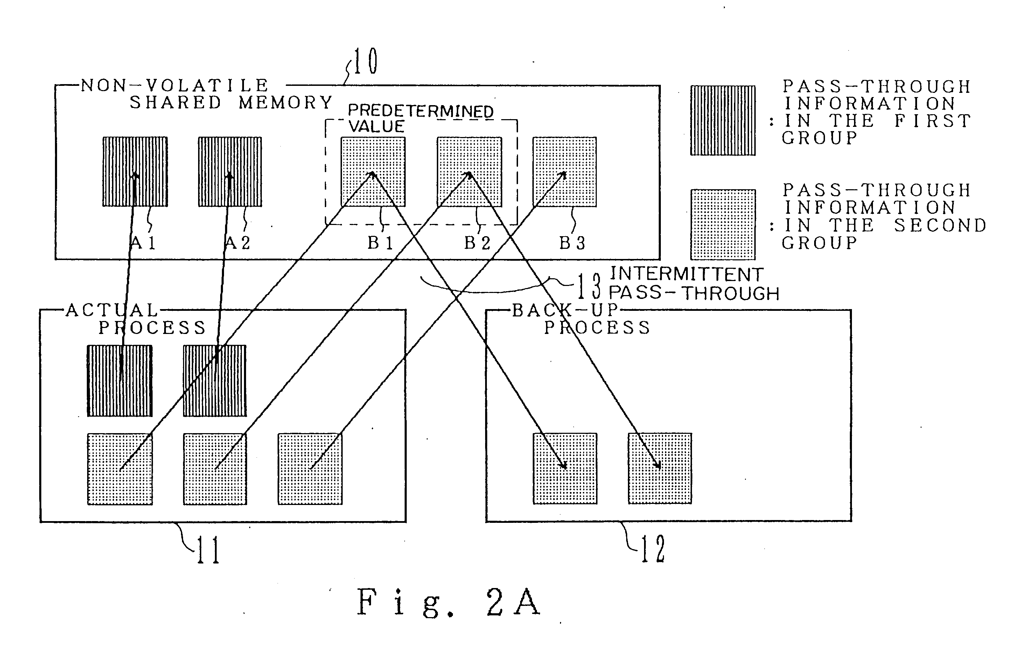

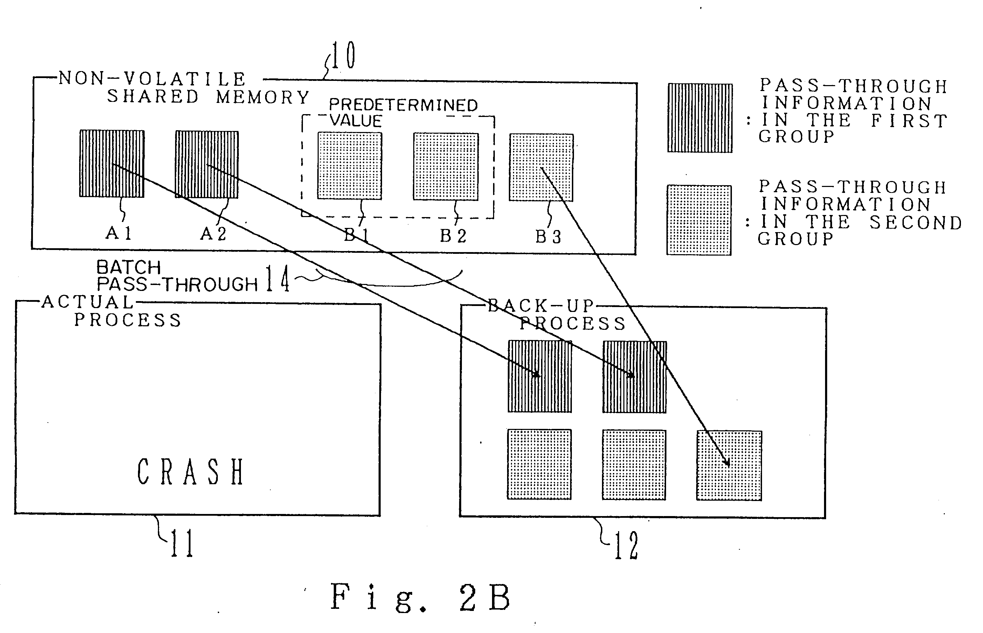

In Figures 2A and 2B, 10 is a non-volatile shared memory, 11 is an actual process for an ordinary operation, 12 is a back-up process waiting to continue tasks at the failure time of the actual process 11, 13 is a processing of the intermittent pass-through, 14 is a processing of the batch pass-through. Also, A1, A2, B1-B3 represent the resource information to be passed through.

In Figs. 2A and 2B, resource information passed through from the actual process 11 to the back-up process 12 is preclassified into two groups in accordance with a frequency of change. The first group (first class of resource information) consists of constantly changing pass-through information, such as information about a condition change, for example pass-through information arising during a data transmission or during establishing of a connection, etc. Meanwhile, the second group (second class of resource information) consists of pass-through information, such as information about completion of a connection, which changes only once in a while, rather than continually. In other words, the first group has resource information with relatively high change frequencies, and said second group has resource information with relatively low change frequencies. Resource information herein refers to the information which is required for being passed through to make the system fault-tolerant.

As shown in Figure 2A, the actual process 11 writes the changed resource information in the nonvolatile shared memory 10 when the pieces of resource information are changed during an ordinary operation (normal operation of the actual process). Of the pieces of resource information, the pieces of pass-through information A1 and A2 in the first group are stored in the non-volatile shared memory 10, and left where they are.

The pieces of pass-through information B1-B3 in the second group are intermittently passed through to the back-up process 12 at a set time interval or when the amount of change information reaches a preset predetermined value. Figure 2A shows the back-up process 12 taking in the pieces B1 and B2 of information into itself, because the amounts of pass-through information B1 and B2 reach the predetermined value.

When the actual process 11 is crashed due to a fault, all the pass-through resource information must be passed through to the back-up process 12, so that the back-up process 12 can continue the tasks handled by the actual process 11. Therefore, as shown in Figure 2B, the back-up process 12 takes over the bits of pass-through information A1, A2 and B3 not yet completely carried over during an ordinary operation, when it is notified of the crash of the actual process 11. Bits of pass-through information A1 and A2 in the first group are carried over in a batch. Among the bits of pass-through information in the second group, only the remaining ones not passed through in the intermittent pass-through processing 13 are carried over.

The bits of pass-through information, A1 and A2, in the first group with high change frequencies are carried over from the actual process 11 to the back-up process 12 in the batch pass-through processing 14 at a crash time of the actual process 11, as shown in Figure 2B. Thus, the overhead for the pass-through during an ordinary operation of the actual process 11 can be reduced.

The bits of pass-through information, B1-B3, in the second group with low change frequencies are carried over from the actual process 11 to the back-up process 12 in the intermittent pass-through processing 13 during an ordinary operation, as shown in Figure 2A. Namely, since the bits of pass-through information B1 and B2 have already been passed-through during an ordinary operation, when the back-up process 12 takes over, at a crash time of the actual process 11, only the bits of pass-through information A1 and A2 in the first group and B3 in the second group that were not carried over during an intermittent pass-through remain to be carried over. Consequently, when the actual process 11 is crashed, bits of information already passed through by the intermittent processing 13 need not be carried over, and the processing time required for the information carrying-over can be reduced, thereby improving the switching performance.

As described above, by classifying the resource information in some way, for example by considering the change frequencies of resource information, the joint use of the batch pass-through processing 14 and the intermittent pass-through processing 13 enables an efficient reduction in overhead both during an ordinary operation and at a crash time.

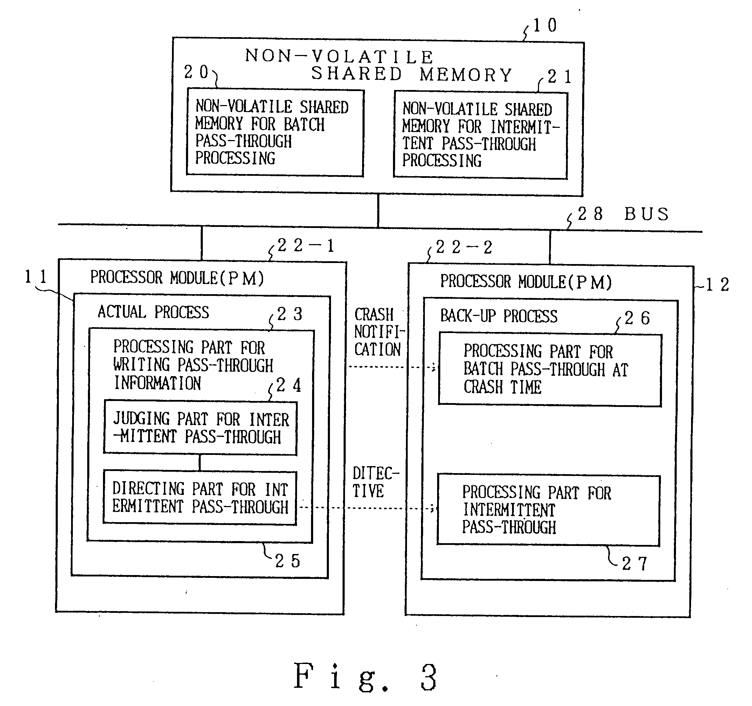

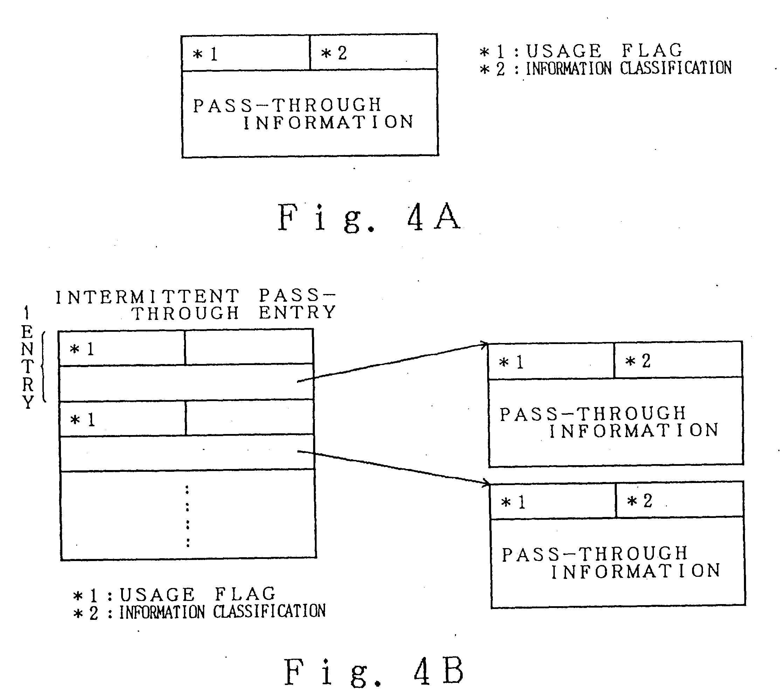

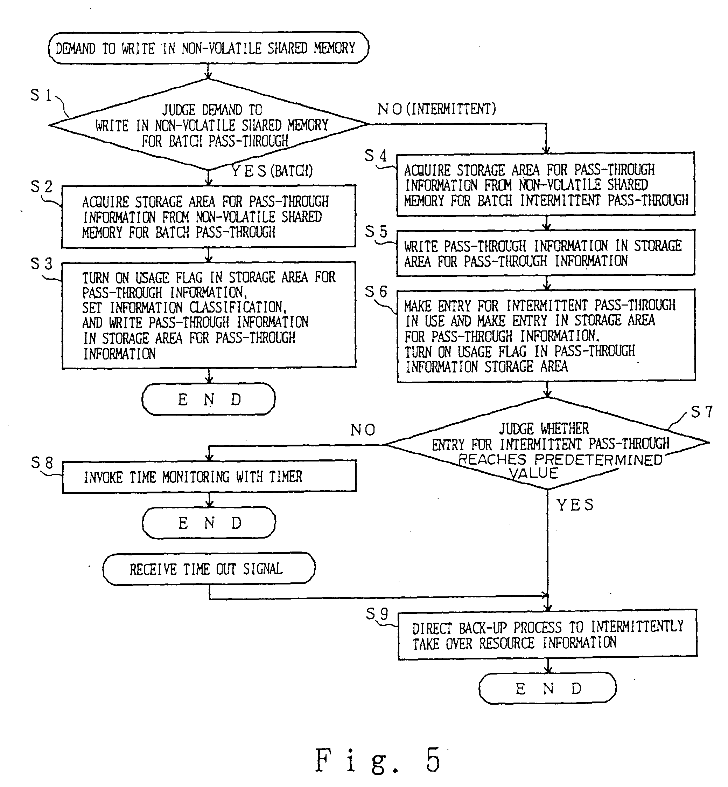

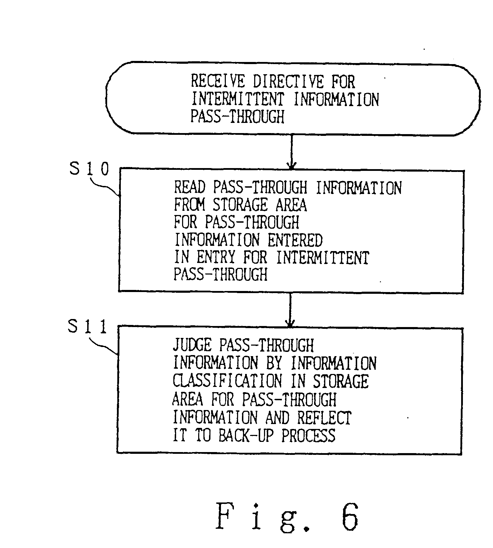

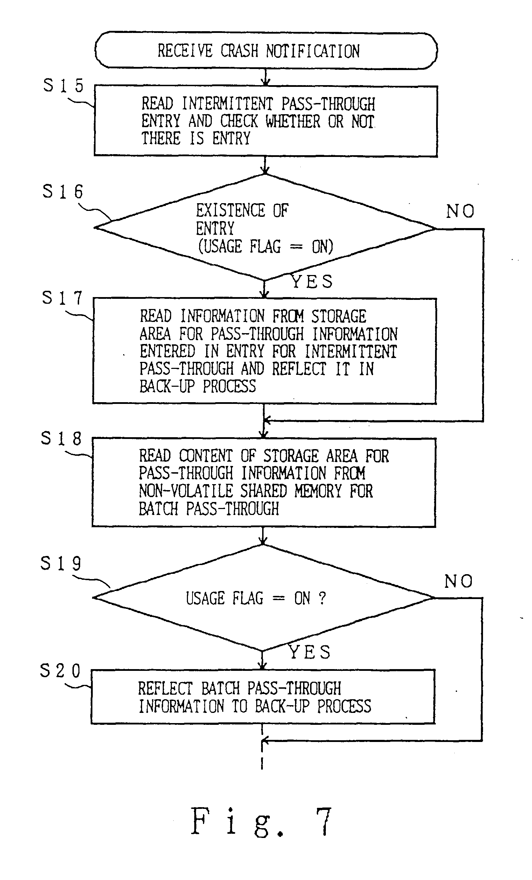

Figure 3 shows an example of a system (computing apparatus) embodying the invention. Figure 4 shows an example of a data structure of the pass-through information used in to the Fig. 3 embodiment. Figure 5 shows the processing flow of an actual process during an ordinary operation in the Fig. 3 embodiment. Figure 6 shows the processing flow of a back-up process during an ordinary operation in the Fig. 3 embodiment. Figure 7 shows the processing flow of the back-up process at a crash time in the Fig. 3 embodiment.

Fig. 3 shows a computer system (combined system) embodying the invention. In Figure 3, the same reference numerals as in Figure 2 designate the same components. 20 is a non-volatile shared memory (first storage area) for a batch pass-through. 21 is a non-volatile shared memory (second storage area) for an intermittent pass-through. 22-1 and 22-2 are processor modules (PM) each equipped with a CPU, a memory and so forth. 23 is a processing part for writing pass-through information. 24 is a judging part for an intermittent pass-through. 25 is a directing part for an intermittent pass-through. 26 is a processing part (batch transfer means) for a batch pass-through at a crash time. 27 is a processing part for an intermittent pass-through (parts 24, 25 and 27 constitute intermittent transfer means) . 28 are buses.

Processor modules 22-1 and 22-2 are physical units that can exclusively use a CPU and a memory. Buses 28 are data transmission paths that interconnect the processor modules and that connect the non-volatile shared memory 10 and the processor modules.

Established within the non-volatile shared memory 10 are an area (first storage area) 20 of the non-volatile shared memory for a batch pass-through, for storing batch pass-through information, and an area (second storage area) 21 of the non-volatile shared memory for an intermittent pass-through, for storing intermittent pass-through information.

In the example of Figure 3, the processor modules 22-1 and 22-2 each have a control monitor for process execution within a respective processor module unit, and under this monitor's control the actual process 11 is operating within the processor module 22-1 and the back-up process 12 is set in the processor module 22-2 and stands-by.

When a demand is made to write the pass-through information, due to a change in the resource information, the processing part for writing pass-through information 23 in the actual process 11 judges to which class (group) the resource information belongs, and writes information belonging to the first group to the non-volatile shared memory for a batch pass-through 20, and writes information belonging to the second group to the non-volatile shared memory for an intermittent pass-through 21.

Furthermore, the judging part for an intermittent pass-through 24 determines whether an intermittent pass-through processing is currently necessary or not, and it directs the back-up process 12 to receive intermittent pass-through via a directing part for intermittent pass-through 25 when the change amount exceeds the predetermined value and a pass-through is necessary.

The back-up process 12 begins processing of the pass-through resource information either in response to a crash notification of the actual process 11 from a fault detection part (not shown in the drawing) or in response to a directive from the directing part for the intermittent pass-through. It processes pass-through resource information via the processing part for a batch passthrough 26 in the case of such a crash notification, as shown in Figure 2B. It processes passthrough resource information via the processing part for an intermittent pass-through 27 in the case of such a directive for an intermittent pass-through by referring to the non-volatile shared memory for an intermittent pass-through 21, as shown in Figure 2A.

The data structure of the batch pass-through information stored in the non-volatile shared memory for a batch pass-through 20 is shown in Figure 4A. *1 is a usage or in-use flag (first usage flag) for showing whether the information is valid or not. *2 is a storage area for information classification.

The intermittent pass-through information stored in the non-volatile shared memory for an intermittent pass-through 21 is controlled using an intermittent information table in which each entry corresponds to a piece of stored intermittent pass-through information, as shown in Figure 4B. *1 is a usage flag (second usage flag) for showing whether the information is valid or not. *2 is a storage area for information classification. Each entry registers one pass-through worth (one piece) of information. The information classification refers to pass-through information during a data transmission, or during establishing of a connection, or upon completion of a connection. As described before, the pass-through information during a data transmission, while establishing a connection, etc. is information for a batch pass-through, whereas the pass-through information about completion of a connection is information for an intermittent pass-through.

Next, concrete processing contents of the actual process 11 and the back-up process 12 in the Fig. 3 embodiment will be elaborated.

During an ordinary operation, when the demand to write resource information in the non-volatile shared memory 10 is made, the actual process 11 begins processing, as shown in Figure 5. S1-S9 in the following elaboration correspond to the processings S1-S9 shown in Figure 5.

S1 judges whether or not a demand to write resource information in the non-volatile shared memory 20 is actually one that should be written in the non-volatile shared memory for a batch pass-through 20 shown in Figure 3. In other words, S1 judges whether the resource information belongs to the first group (for batch processing) or the second group (for intermittent processing). An intermittent pass-through case goes on to a processing S4.

S2 acquires a storage area for pass-through information in the non-volatile shared memory for a batch pass-through 20 in a batch pass-through case.

S3 turns ON the usage flag (first usage flag) in the storage area for pass-through information, sets the information classification, and writes the pass-through information demanded to be written in the storage area for pass-through information. It then finishes its own processing.

S4 acquires a storage area for pass-through information from the non-volatile shared memory for an intermittent pass-through 21 in an intermittent pass-through case.

S5 writes pass-through information in the storage area for pass-through information.

S6 makes an entry for an intermittent pass-through in use and makes an entry in a storage area for pass-through information. Then, S6 turns ON the usage flag (second usage flag) designating that the storage area for pass-through information is used.

S7 judges whether the entries for an intermittent pass-through reach a predetermined value (predetermined number). If they reach the predetermined value, a processing S9 is executed.

S8 invokes time monitoring with a timer, if it was found in S9 that the number of entries has not reached the predetermined value. The intermittent pass-through in the embodiment of this invention is made when no intermittent pass-through has taken place after a certain time period has elapsed since the last intermittent pass-through information was written. Therefore, S8 invokes time monitoring with the timer after the last intermittent pass-through information is written. S8 stops its own processing after this invoking of the time monitoring. Meanwhile, after said invoking of the time monitoring, when a TIME OUT signal is received, processing S9 is executed.

S9 directs the back-up process 12 to intermittently take over resource information and stops its own processing.

When the back-up process 12 receives intermittently from the actual process 11 a directive to accept (read in) stored resource information, the back-up process 12 executes processings S10 and S11 shown in Figure 6.

S10 reads the pass-through information from the storage area for pass-through information identified in an entry for an intermittent pass-through shown in Figure 4B.

Sll judges pass-through information according to its information classification as stored in a storage area for pass-through information, supplies the information classification to the back-up process 12 and turns OFF the usage flag (second usage flag). S11 then stands by for the next instruction.

The back-up process 12 executes processings S15-S20 shown in Figure 7 by activating the processing part for a batch pass-through at a crash time 26, when it receives a crash notification of the actual process 11.

S15 reads an intermittent pass-through entry from the non-volatile shared memory for an intermittent pass-through 21 and checks whether or not there is an entry of registered pass-through information.

S16 advances to a processing S17 if the usage flag (second usage flag) is ON and skips it if the usage flag is OFF. The usage flag ON indicates the existence of an entry.

S17 reads information from the storage area for pass-through information included in the entry for an intermittent pass-through and supplies it to the back-up process 12.

S18 reads the content of the storage area for pass-through information from the non-volatile shared memory for a batch pass-through 20.

S19 judges whether the usage flag of the storage area for the pass-through information is ON or not. S19 advances to the next processing S20, if the usage flag is ON.

S20 supplies batch pass-through information to the back-up process 12. If all the above pass-through processings are completed, the back-up process 12 resumes its tasks as the actual process.

Through the above procedures, some part of the information in the second group of the actual process is passed through by intermittent processings during an ordinary operation; and the remaining part, i.e. the information in the first group and the remaining information in the second group, is passed through at a crash time. By passing through only such remaining information instead of all information, the amount of information to be passed through at the crash time is less. Therefore, all such information is passed through in a shorter time period. Since pieces of information in the second group have, for example, lower frequencies of change than those in the first group, the actual process is halted on few occasions. This provides an efficient operating environment.

## Claims

1. Computing apparatus, operable selectively to execute an actual process (11) and a back-up process (12), the said back-up process being executed in place of the said actual process following a crash of the said actual process, which apparatus includes:
a shared memory (10), accessible by both the said actual process (11) and the said back-up process (12), in which resource information (A1, A2, B1, B2, B3) needed by the said back-up process (12) to enable it to continue handling tasks of the computing apparatus following such a crash is stored by the said actual process (11) during normal operation thereof so that the stored resource information can be read subsequently by the said back-up process (12);
batch transfer means (26) operable, following such a crash of the said actual process, to cause the said back-up process (12) to read from the shared memory any such resource information (A1, A2) stored therein that has been preclassified as belonging to a first class of the said resource information, such stored first-class resource information not being read by the said back-up process during the said normal operation of the said actual process; and
intermittent transfer means (24, 25, 27) operative during the said normal operation of the actual process to cause the back-up process to read intermittently from the shared memory (10) resource information (B1, B2) stored therein that has been preclassified as belonging to a second class of the said resource information different from the said first class, the said resource information (A1, A2) belonging to the said first class having higher frequencies of change than resource information (B1, B2, B3) belonging to the said second class, such intermittent reading being caused to take place when the volume of stored resource information belonging to the said second class reaches a predetermined threshold value and/or when a preset time interval has expired;
the said batch transfer means (26) also being operative, following such a crash of the said actual process (11), to cause the said back-up process (12) to read from the said shared memory (10) any remaining second-class resource information (B3) stored therein that has not already been transferred to the said back-up process by the said intermittent reading.

2. Computing apparatus as claimed in claim 1, wherein the said shared memory (10) has a first storage area (20) for storing resource information (A1, A2) belonging to the said first class, and a second storage area (21) for storing resource information (B1, B2, B3) belonging to the said second class.

3. Computing apparatus as claimed in any preceding claim, wherein, when valid resource information (A1, A2) belonging to the said first class is stored by the said actual process in the said shared memory (10), a first usage flag is set to an ON state, and the said batch transfer means (26) are operative to cause the said back-up process (12) to read the stored first-class resource information from the shared memory when the said first usage flag is found to be in the said ON state following such a crash of the said actual process.

4. Computing apparatus as claimed in any preceding claim, wherein, when each piece of resource information (B1, B2, B3) belonging to the said second class is stored in the said shared memory (10), a corresponding entry is made in an intermittent information table (Fig. 4B), which corresponding entry includes a second usage flag that is set to an ON state when the entry concerned is made, and the said intermittent transfer means (25, 27) are operable to cause the said intermittent reading to occur when the said second usage flag of such a corresponding entry in the said intermittent information table is found to be in the ON state following such a crash of the said actual process.

5. Computing apparatus as claimed in claim 4, wherein the said intermittent transfer means (27) are operable, after the said intermittent reading of a stored piece of the said second-class resource information (B1, B2) has been completed, to change the said second usage flag of the corresponding entry in the said intermittent information table to an OFF state.

6. A method of transferring resource information in computing apparatus operable selectively to execute an actual process (11) and a back-up process (12), the said back-up process (12) being executed in place of the said actual process (11) following a crash of the said actual process, and the resource information being information needed by the back-up process to enable it to continue handling tasks of the computing apparatus following such a crash of the said actual process, in which method:
such resource information is stored by the actual process (11), during normal operation thereof, in a shared memory (10) that is accessible by both the actual process and the back-up process so that the stored resource information can be read subsequently by the back-up process;
following such a crash of the said actual process (11), the said back-up process (12) is caused to read from the said shared memory (10) any such resource information (A1, A2) stored therein that has been preclassified as belonging to a first class of the said resource information, such stored first-class resource information not being read by the said back-up process during the said normal operation of the actual process;
during the said normal operation of the actual process (11) the back-up process is caused to read intermittently from the said shared memory (10) resource information (B1, B2) stored therein that has been preclassified as belonging to a second class of the said resource information, different from the said first class, the said resource information belonging to the said first class having higher frequencies of change than resource information belonging to the said second class, such intermittent reading being caused to take place when the volume of stored resource information belonging to the said second class reaches a predetermined threshold value and/or when a preset time interval has expired; and
following such a crash of the said actual process, the said back-up process is caused to read from the said shared memory (10) any remaining second-class resource information (B3) stored therein that has not already been transferred to the said back-up process by the said intermittent reading.

## Patentansprüche

1. Rechnergerät, welches selektiv betreibbar ist, um einen aktuellen Prozeß (11) und einen Sicherungsprozeß (12) auszuführen, wobei der Sicherungsprozeß anstelle des aktuellen Prozesses nachfolgend einem Absturz des aktuellen Prozesses ausgeführt wird, welches Gerät folgendes enthält:
einen Gemeinschaftsspeicher (10), der von sowohl dem aktuellen Prozeß (11) als auch dem Sicherungsprozeß (12) zugreifbar ist, in welchem Resourcen-Informationen (A1, A2, B1, B2, B3), die bei dem Sicherungsprozeß (12) benötigt werden, um diesen zu befähigen mit der Handhabung von Aufgaben des Rechnergerätes fortzufahren und zwar nachfolgend einem Absturz, durch den aktuellen Prozeß (11) während des normalen Betriebes desselben abgespeichert werden, so daß die gespeicherten Resourcen-Informationen nachfolgend durch den Sicherungsprozeß (12) gelesen werden können;
eine Stapel-Übertragungseinrichtung (26), die betreibbar ist, um nachfolgend solch einem Absturz des aktuellen Prozesses, den Sicherungsprozeß (12) zu veranlassen aus dem Gemeinschaftsspeicher irgendwelche solchen Resourcen-Informationen (A1, A2) auszulesen, die darin abgelegt sind und die vorklassifiziert worden sind, so daß sie zu einer ersten Klasse der Resourcen-Informationen gehören, wobei solche gespeicherten Erstklassen-Resourcen-Informationen durch den Sicherungsprozeß während des normalen Betriebes des aktuellen Prozesses nicht gelesen werden; und
eine Intermittier-Übertragungseinrichtung (24, 25,27), die während des normalen Betriebes des aktuellen Prozesses betreibbar ist, um den Sicherungsprozeß zu veranlassen, intermittierend aus dem Gemeinschaftsspeicher (10) Resourcen-Informationen (B1, B2) zu lesen, die darin gespeichert sind, und die vorklassifiziert worden sind, so daß sie einer zweiten Klasse der Resourcen-Informationen zugehören, die verschieden ist von der ersten Klasse, wobei die Resourcen-Informationen (A1, A2), welche zu der ersten Klasse gehören, höhere Änderungsfrequenzen besitzen als die Resourcen-Informationen (B1, B2, B3), die zu der zweiten Klasse gehören, wobei ein solches intermittierendes Lesen veranlaßt wird dann stattzufinden, wenn das Volumen der gespeicherten Resourcen-Informationen, die zu der zweiten Klasse gehören, einen vorbestimmten Schwellenwert erreicht und/oder wenn ein vorbestimmtes Zeitintervall verstrichen ist;
wobei die Stapel-Übertragungseinrichtung (26) auch betreibbar ist und zwar nachfolgend einem Absturz des aktuellen Prozesses (11), um den Sicherungsprozeß (12) zu veranlassen, aus dem Gemeinschaftsspeicher (10) irgendwelche verbliebenen Zweitklassen-Resourcen-Informationen (B3) zu lesen, die darin abgespeichert sind, die noch nicht bereits zu dem Sicherungsprozeß durch den intermittierenden Lesevorgang übertragen worden sind.

2. Rechnergerät nach Anspruch 1, bei dem der Gemeinschaftsspeicher (10) einen ersten Speicherbereich (20) zum Speichern der Resourcen-Informationen (A1, A2), die zu der ersten Klasse gehören, und einen zweiten Speicherbereich (21) aufweist, um die Resourcen-Informationen (B1, B2, B3) zu speichern, die zu der zweiten Klasse gehören.

3. Rechnergerät nach irgendeinem der vorhergehenden Ansprüche, bei dem dann, wenn gültige Resourcen-Informationen (A1, A2), welche zu der ersten Klasse gehören, durch den aktuellen Prozeß in dem Gemeinschaftsspeicher (10) abgelegt werden, ein erstes Verwendungs-Flag in den EIN Zustand gesetzt wird, und bei dem die Stapel-Übertragungseinrichtung (26) so betreibbar ist, um den Sicherungsprozeß (12) zu veranlassen die gespeicherten Erstklassen-Resourcen-Informationen aus dem Gemeinschaftsspeicher zu lesen, wenn das erste Verwendungs-Flag als im EIN Zustand befindlich festgestellt wird und zwar nachfolgend solch einem Absturz des aktuellen Prozesses.

4. Rechnergerät nach irgendeinem der vorhergehenden Ansprüche, bei dem dann, wenn jedes Stück der Resourcen-Informationen (B1, B2, B3), die zu der zweiten Klasse gehören, in dem Gemeinschaftsspeicher (10) gespeichert werden, ein entsprechender Eintrag in einer Intermittier-Informationstabelle (Fig.4B) vorgenommen wird, welcher entsprechender Eintrag ein zweites Verwendungs-Flag enthält, welches auf einen EIN Zustand gesetzt wird, wenn der in Betracht stehende Eintrag ausgeführt wird, und bei dem die Intermittier-Übertragungseinrichtung (25, 27) betreibbar ist, das intermittierende Lesen stattfinden zu lassen, wenn das zweite Verwendungs-Flag solch eines entsprechenden Eintrags in der Intermittier-Informationstabelle als im EIN Zustand befindlich gefunden wird und zwar nachfolgend solch einem Absturz des aktuellen Prozesses.

5. Rechnergerät nach Anspruch 4, bei dem die Intermittier-Übertragungseinrichtung (27) betreibbar ist um nach der Vervollständigung des intermittierenden Lesevorgangs des gespeicherten Stückes von Zweitklassen-Resourcen-Informationen (B1, B2) das zweite Verwendungs-Flag des entsprechenden Eintrags in der Intermittier-Informationstabelle auf einen AUS Zustand zu ändern.

6. Verfahren zum Übertragen von Resourcen-Informationen in einem Rechnergerät, welches selektiv betreibbar ist, um einen aktuellen Prozeß (11) und einen Sicherungsprozeß (12) auszuführen, wobei der Sicherungsprozeß (12) anstelle des aktuellen Prozesses (11) nachfolgend einem Absturz des aktuellen Prozesses ausgeführt wird und wonach die Resourcen-Informationen aus Informationen bestehen, die durch den Sicherungsprozeß benötigt werden, damit dieser befähigt wird, die Handhabung von Aufgaben des Rechnergerätes nachfolgend solch einem Absturz des aktuellen Prozesses fortzusetzen, wobei bei diesem Verfahren:
solche Resourcen-Informationen durch den aktuellen Prozeß (11) während des normalen Betriebes desselben in einem Gemeinschaftsspeicher (10) gespeichert werden, der von sowohl dem aktuellen Prozeß als auch dem Sicherungsprozeß zugreifbar ist, so daß die abgespeicherten Resourcen-Informationen anschließend von dem Sicherungsprozeß gelesen werden können;
nachfolgend solch einem Absturz des aktuellen Prozesses (11) der Sicherungsprozeß (12) veranlaßt wird, aus dem Gemeinschaftsspeicher (10) irgendwelche solchen Resourcen-Informationen (A1, A2), die darin abgespeichert sind, auszulesen, die vorklassifiziert wurden, so daß sie zu einer ersten Klasse von Resourcen-Informationen gehören, wobei solche gespeicherten Erstklassen-Resourcen-Informationen durch den Sicherungsprozeß während des normalen Betriebes des aktuellen Prozesses nicht gelesen werden;
während des normalen Betriebes des aktuellen Prozesses (11) der Sicherungsprozeß veranlaßt wird intermittierend aus dem Gemeinschaftsspeicher (10) Resourcen-Informationen (B1, B2) zu lesen, die darin abgespeichert sind, und die vorklassifiziert worden sind, so daß sie zu einer zweiten Klasse von Resourcen-Informationen gehören, die verschieden ist von der ersten Klasse, wobei die Resourcen-Informationen, die zu der ersten Klasse gehören, höhere Änderungsfrequenzen besitzen als die Resourcen-Informationen, die zu der zweiten Klasse gehören, wobei ein solches intermittierendes Lesen veranlaßt wird stattzufinden, wenn das Volumen der gespeicherten Resourcen-Informationen, die zu der zweiten Klasse gehören, einen vorbestimmten Schwellenwert erreicht und/oder wenn ein vorbestimmter Zeitintervall verstrichen ist; und
nachfolgend solch einem Absturz des aktuellen Prozesses der Sicherungsprozeß veranlaßt wird, aus dem Gemeinschaftsspeicher (10) irgendwelche verbliebenen Zweitklassen-Resourcen-Informationen (B3) zu lesen, die darin abgespeichert sind, welche auch nicht bereits zu dem Sicherungsprozeß aufgrund des intermittierenden Lesevorgangs übertragen worden sind.

## Revendications

1. Appareil de traitement, pouvant fonctionner sélectivement pour exécuter un traitement réel (11) et un traitement de secours (12), ledit traitement de secours étant exécuté à la place dudit traitement réel à la suite d'une panne dudit traitement réel, ledit appareil incluant :
une mémoire partagée (10), accessible à la fois par ledit traitement réel (11) et ledit traitement de secours (12), dans laquelle des informations de ressource (A1, A2, B1, B2, B3) demandées par ledit traitement de secours (12) pour lui permettre de continuer la prise en charge de tâches de l'appareil de traitement à la suite de cette panne sont stockées par ledit traitement réel (11) pendant une opération normale de celui-ci pour que les informations de ressource stockées puissent être lues ensuite par ledit traitement de secours (12) ;
un moyen de transfert par lots (26) pouvant être mis en fonctionnement, à la suite de cette panne dudit traitement réel, pour faire en sorte que ledit traitement de secours (12) lise dans la mémoire partagée toutes les informations de ressource (A1, A2) stockées dans celle-ci qui ont été préalablement classées comme appartenant à une première classe desdites informations de ressource, lesdites informations de ressource de première classe stockées n'étant pas lues par ledit traitement de secours pendant ladite opération normale dudit traitement réel ; et,
des moyens de transfert intermittent (24, 25, 27) actifs pendant ladite opération normale du traitement réel pour faire en sorte que le traitement de secours lise de façon intermittente dans la mémoire partagée (10) des informations de ressource (B1, B2) stockées dans celle-ci qui ont été préalablement classées comme appartenant à une seconde classe desdites informations de ressource différente de ladite première classe, lesdites informations de ressource (A1, A2) appartenant à ladite première classe ayant des fréquences de changement plus élevées que les informations de ressource (B1, B2, B3) appartenant à ladite seconde classe, cette lecture intermittente étant amenée à avoir lieu quand le volume des informations de ressource stockées appartenant à ladite seconde classe atteint une valeur de seuil prédéterminée et/ou quand un intervalle de temps préétabli s'est écoulé ;
ledit moyen de transfert par lots (26) étant aussi actif, à la suite de cette panne dudit traitement réel (11), pour faire en sorte que ledit traitement de secours (12) lise dans ladite mémoire partagée (10) toutes les informations de ressource de seconde classe restantes (B3) stockées dans celle-ci qui n'ont pas encore été transférées jusqu'audit traitement de secours par ladite lecture intermittente.

2. Appareil de traitement selon la revendication 1, dans lequel ladite mémoire partagée (10) comporte une première zone de mémoire (20) pour stocker des informations de ressource (A1, A2) appartenant à ladite première classe, et une seconde zone de mémoire (21) pour stocker des informations de ressource (B1, B2, B3) appartenant à ladite seconde classe.

3. Appareil de traitement selon l'une quelconque des revendications précédentes, dans lequel, quand des informations de ressource correctes (A1, A2) appartenant à ladite première classe sont stockées par ledit traitement réel dans ladite mémoire partagée (10), un premier indicateur d'utilisation est établi à un état de présence, et ledit moyen de transfert par lots (26) est actif pour faire en sorte que ledit traitement de secours (12) lise les informations de ressource de première classe stockées dans la mémoire partagée quand ledit premier indicateur d'utilisation est trouvé comme étant audit état de présence à la suite de cette panne dudit traitement réel.

4. Appareil de traitement selon l'une quelconque des revendications précédentes, dans lequel, quand chaque donnée des informations de ressource (B1, B2, B3) appartenant à ladite seconde classe est stockée dans ladite mémoire partagée (10), un élément d'information correspondant est constitué dans une table d'informations intermittentes (Figure 4B), cet élément d'information correspondant incluant un second indicateur d'utilisation qui est mis à un état de présence quand l'élément d'information concerné est constitué, et lesdits moyens de transfert intermittent (25, 27) peuvent être mis en fonctionnement pour faire en sorte que ladite lecture intermittente se produise quand ledit second indicateur d'utilisation de cet élément d'information correspondant dans ladite table d'informations intermittentes est trouvé comme étant à l'état de présence à la suite de cette panne dudit traitement réel.

5. Appareil de traitement selon la revendication 4, dans lequel lesdits moyens de transfert intermittent (27) peuvent être mis en fonctionnement, après que ladite lecture intermittente d'une donnée stockée desdites informations de ressource de seconde classe (B1, B2) a été terminée, pour faire passer ledit second indicateur d'utilisation de l'élément d'information correspondant dans ladite table d'informations intermittentes à un état d'absence.

6. Procédé pour transférer des informations de ressource dans un appareil de traitement pouvant être mis en fonctionnement sélectivement pour qu'il exécute un traitement réel (11) et un traitement de secours (12), ledit traitement de secours (12) étant exécuté à la place dudit traitement réel (11) à la suite d'une panne dudit traitement réel, et les informations de ressource étant des informations demandées par le traitement de secours pour lui permettre de continuer la prise en charge de tâches de l'appareil de traitement à la suite de cette panne dudit traitement réel, procédé dans lequel :
ces informations de ressource sont stockées par le traitement réel (11), pendant une opération normale de celui-ci, dans une mémoire partagée (10) qui est accessible à la fois par le traitement réel et le traitement de secours pour que les informations de ressource stockées puissent être lues ensuite par le traitement de secours ;
à la suite de cette panne dudit traitement réel (11), ledit traitement de secours (12) est amené à lire dans ladite mémoire partagée (10) toutes les informations de ressource (A1, A2) stockées dans celle-ci qui ont été préalablement classées comme appartenant à une première classe desdites informations de ressources, ces informations de ressource de première classe stockées n'étant pas lues par ledit traitement de secours pendant ladite opération normale du traitement réel ;
pendant ladite opération normale du traitement réel (11), le traitement de secours est amené à lire de façon intermittente dans ladite mémoire partagée (10) des informations de ressource (B1, B2) stockées dans celle-ci qui ont été préalablement classées comme appartenant à une seconde classe desdites informations de ressource, différente de ladite première classe, lesdites informations de ressource appartenant à ladite première classe ayant des fréquences de changement plus élevées que les informations de ressource appartenant à ladite seconde classe, cette lecture intermittente étant amenée à avoir lieu quand le volume des informations de ressource stockées appartenant à ladite seconde classe atteint une valeur de seuil prédéterminée et/ou quand un intervalle de temps préétabli s'est écoulé ; et,
à la suite de cette panne dudit traitement réel, ledit traitement de secours est amené à lire dans ladite mémoire partagée (10) toutes les informations de ressources de seconde classe restantes (B3) stockées dans celle-ci qui n'ont pas encore été transférées jusqu'audit traitement de secours par ladite lecture intermittente.
